# EUROPEAN PATENT APPLICATION

(11) **EP 4 756 337 A1**
(43) Date of publication of application: **10.06.2026**
(21) Application number: 24852179.1
(22) Date of filing: 30.07.2024
(51) Int. Cl.: F25D 23/06, F16L 59/02

(54) **HEAT INSULATOR**

(30) Priority: 04.08.2023 KR 20230102479
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR)
(74) Representative: Ter Meer Steinmeister & Partner
(86) International application number: PCT/KR2024/011173
(87) International publication number: WO 2025/033825

(57) **Abstract**

The present specification relates to an embodiment of a heat insulator comprising a supporter which is inserted into a space formed by a first plate to a third plate and is in contact with each of the first plate to the third plate, in order to support side surfaces of the heat insulator, so as to support each of the first plate to the third plate, the supporter including: a first supporter formed in a lattice shape and including one surface in contact with one surface of the first plate to support the first plate; and a second supporter formed in a lattice shape that is at least partially identical to the first supporter, and including one surface in contact with one surface of the second plate, which is arranged apart from the first plate, to support the second plate, in which one or more of the first supporter and the second supporter includes a bent surface formed on one side thereof and the bent surface comes into contact with one surface of the third plate, which joins the first plate to the second plate, so as to support the third plate.

## Description

### [Technical Field]

The present disclosure relates to a heat insulator. The present disclosure relates to a refrigerator including a heat insulator.

### [Background Art]

In refrigerators and other devices, a heat insulator is used to prevent the temperature inside the refrigerator from rising due to the temperature difference between the outside and the inside. In this case, as the heat insulator, a vacuum heat insulator is widely used to which a vacuum insulation technique is applied, utilizing a thermal insulation method based on the phenomenon in which the thermal conductivity of a low-pressure gas decreases. In addition, the heat insulator typically includes a first plate and a second plate forming a certain space, and a vacuum may be formed by discharging a gas (for example, air) from the space between the first and second plates and sealing the space.

The above-mentioned heat insulator includes a panel shape, and devices such as refrigerators include a configuration in which multiple vacuum heat insulators are assembled and coupled. Accordingly, each side surface of the heat insulator is coupled to another heat insulator. The coupling to the other heat insulator may typically be achieved through welding between the plates forming the heat insulator.

Meanwhile, as described above, when the sealed space between the first and second plates in the heat insulator becomes a vacuum, there is a disadvantage in that the heat insulator is vulnerable to the influence of atmospheric pressure or external force. Accordingly, a technology has been proposed in which a supporter formed with a supporter pin for supporting the portion between a first plate and a second plate forming the sealed vacuum space is arranged in a sliding manner within the sealed space, as disclosed in Korean Patent Publication No. 10-2019-0013338 (published on February 11, 2019, hereinafter referred to as "prior document") of the present applicant.

However, the heat insulator according to the prior document includes a problem in that atmospheric pressure or external force is concentrated on the supporter pin or at each point of the first or second plate on which the supporter pin is arranged, and as a result, there is a problem in that the supporter pin or one point of each plate on which the supporter pin is arranged becomes vulnerable.

In the case of a heat insulator including a side surface, there is a problem in that it is very difficult to arrange the supporter on the side surface by the method of arranging the supporter in the sliding manner as in the prior document. When the supporter is not arranged on the side surface, there is a problem in that the structure of the heat insulator is easily damaged when a lateral load is applied.

### [Disclosure]

### [Technical Problem]

An object of the present disclosure is to improve the limitations of the prior arts as described above, and to provide an embodiment in which the side surface of a heat insulator can be supported and the applied load can be efficiently distributed to further improve structural strength.

**In** addition, an object thereof is to provide an embodiment in which the assembly of the heat insulator can be easily accomplished.

**In** addition, an object thereof is to provide an embodiment that can reduce the manufacturing cost of a heat insulator.

### [Technical Solution]

A heat insulator of the present disclosure for solving the above-described problem includes a supporter arranged in a space formed between a first plate and a second plate or in the vicinity of the space.

The supporter may be connected to or supported by at least one of the first plate, the second plate, and the side plate. The supporter may include a first supporter including one surface connected to one surface of the first plate to support the first plate. The supporter may include a second supporter including one surface connected to one surface of a second plate, which is arranged to be spaced apart from the first plate, to support the second plate. At least one of the first supporter and the second supporter may be formed in a lattice shape.

**In** the supporter, one or more of the first support and the second support may include a bent surface formed on one side thereof. The bent surface may be connected to one surface of a side plate connecting the first plate and the second plate to support the side plate.

That is, the supporter portion formed by the bent surface is connected to and supports the side surface on which the first plate and the second plate are connected to the side plate, thereby forming a side support structure.

**In** this way, the side support structure of the supporter can prevent the spacer from collapsing even when a lateral load is applied to the heat insulator.

An embodiment of a heat insulator that uses the structural features of the supporter as a means for solving the above-described problem may include a first plate and a second plate arranged to be spaced apart from the first plate. The heat insulator may include a side plate connecting the first plate and/or the second plate on one side of the first plate and/or one side of the second plate. The heat insulator may include a first supporter including one surface supporting the first plate. The heat insulator may include a second supporter including one surface supporting the second plate. The heat insulator may include a third supporter that is coupled to the first supporter and/or the second supporter between the first supporter and the second supporter, and/or supports the first supporter and/or the second supporter. One or more of the first supporter and the second supporter may include a bent surface formed on at least one side. The bent surface supports the side plate connecting the first plate and/or the second plate. The first supporter may be provided in a lattice shape. The second supporter may be provided in a lattice shape. The second supporter may be formed in a lattice shape at least partially identical to the first supporter.

**In** an embodiment of the heat insulator, the first support and/or the second support may be formed in the same lattice shape.

The first supporter and the second supporter may be formed in a symmetrical shape when facing each other.

The first supporter may include a first central portion connected to the first plate. The first supporter may include a first side surface connected to one surface of the side plate on one side of the first central portion. The first supporter may include a plurality of first space couplers protruding from the first central portion and coupled to the third supporter.

The second supporter may include a second central portion connected to the second plate. The second supporter may include a second side surface connected to one surface of the side plate on one side of the second central portion. The second supporter may include a plurality of second space couplers protruding from the second central portion and coupled to the third supporter.

The third supporter may include a plurality of first support couplers that protrude from one surface facing the first supporter and are male-female coupled to the plurality of first space couplers. The third supporter may include a plurality of second support couplers that protrude from the other surface facing the second supporter and are male-female coupled to the plurality of second space couplers.

The third supporter may include a first shielding portion that is arranged between the first supporter and the third supporter and/or divides a space between the first supporter and the third supporter into two or more regions. The third supporter may include a second shielding portion that is arranged between the second supporter and the third supporter and divides the space between the second supporter and the third supporter into two or more regions.

When the bent surface and the side plate are connected to each other, a gap including a predetermined area may be formed between the bent surface and the side plate.

Another embodiment of a heat insulator that uses the structural features of the supporter as a means for solving the above-described problem may include a first plate, and a second plate arranged to be spaced apart from the first plate. The heat insulator may include a side plate connecting the first plate and/or the second plate on one side of the first plate and/or on one side of the second plate. The heat insulator may include a first supporter including one surface connected to one surface of the first plate and/or the other surface coupled to the other surface of a second supporter to support the first plate. The heat insulator may include a second supporter including one surface connected to one surface of the second plate and the other surface coupled to the other surface of the first supporter to support the second plate. One or more of the first supporter and the second supporter may include a bent surface formed on at least one side thereof. The bent surface is connected to one surface of the side plate, which connects the first plate to the second plate, so as to support the side plate.

**In** an embodiment of the heat insulator, the first supporter and the second supporter may be formed in an asymmetrical shape when facing each other.

The first supporter may include a first central portion connected to the first plate. The first supporter may include a first side surface connected to one surface of the side plate on one side of the first central portion. The first supporter may include a plurality of first space couplers protruding from the first central portion and coupled to the second supporter.

The second supporter may include a second central portion connected to the second plate. The second supporter may include a second side surface connected to one surface of the side plate on one side of the second central portion. The second supporter may include a plurality of second space couplers protruding from the second central portion and coupled to the first supporter.

The plurality of first space couplers and/or the plurality of second space couplers may be arranged in a plurality of rows and/or a plurality of columns according to the lattice shape and protrude.

The plurality of first space couplers and/or the plurality of second space couplers may protrude alternately in a first coupler shape and a second coupler shape different from the first coupler shape, in an arrangement according to the lattice shape.

The plurality of first space couplers may protrude in the first coupler shape at a position in the arrangement where a sum of matrix values corresponds to an even number. The plurality of first space couplers may protrude in the second coupler shape at a position in the arrangement where the sum of the matrix values corresponds to an odd number.

The plurality of second space couplers may protrude in the second coupler shape at a position in the arrangement where the sum of the matrix values corresponds to an even number. The plurality of second space couplers may protrude in the first coupler shape at a position in the arrangement where the sum of the matrix values corresponds to an odd number.

When the bent surface and the side plate are connected, a gap including a predetermined area may be formed between the bent surface and the side plate.

The embodiments of the heat insulator as described above are not limited to those described above, and may include embodiments described in the specific description to be described below or embodiments that may be inferred/derived from the specific description.

### [Advantageous Effects]

According to the embodiment of the heat insulator as described above, one side of the supporter formed as a bent surface supports the side surface of the heat insulator, thereby improving the structural strength of the side surface, and by supporting the plate using the plurality of support portions, there is an effect of minimizing deformation due to vacuum pressure.

**In** addition, by supporting the portion between the supporters with a plurality of pillars, the applied load is distributed, which includes the effect of improving the overall structural strength of the supporter.

**In** addition, since the side surface of the supporter is formed as a bent surface, the supporter can be inserted into the space formed by the plate in a stable and simple manner in a sliding manner, and the assembly of the heat insulator can be easily accomplished.

**In** addition, since the structures of the supporter portions supporting both plates are similarly formed in an assemblable manner, an effect of reducing the manufacturing cost of the heat insulator can be achieved.

The effects according to the embodiments of the heat insulator described above are not limited to those described above, and may also include effects described in the specific description below or effects that can be inferred/derived from the specific description.

### [Description of Drawings]

FIG. 1 is a perspective view illustrating the exterior of a refrigerator according to one embodiment of the present disclosure.
FIG. 2 is a conceptual diagram illustrating a heat insulator provided in the refrigerator of FIG. 1.
FIG. 3 is a conceptual diagram illustrating a third plate provided on a plate of FIG. 2.
FIG. 4 is a conceptual diagram illustrating a thermal insulator provided on the plate of FIG. 3.
FIGS. 5a and 5b are schematic diagrams illustrating a supporter for a heat insulator according to an embodiment.
FIG. 6 is a schematic diagram illustrating an embodiment of the heat insulator.
FIG. 7 is a cross-sectional view of the heat insulator illustrated in FIG. 6.
FIG. 8 is a schematic diagram illustrating another embodiment of the heat insulator.
FIG. 9 is an exploded view of the supporter for the heat insulator illustrated in FIG. 8.
FIG. 10 is a cross-sectional view of the heat insulator illustrated in FIG. 8.

### [Mode for Invention]

Hereinafter, a common description describing the parts commonly defined in all embodiments of the present disclosure will be described.

Optionally, the heat insulator of the present disclosure may be provided as a single heat insulator. For example, the heat insulator may provide a first wall extending in one direction and a second wall extending in a direction different from the one direction. Optionally, the heat insulator of the present disclosure may include a first heat insulator and a second heat insulator. The second heat insulator may be provided as a separate component separated from the first heat insulator. The second heat insulator may be connected to the first heat insulator by a connector. In the present disclosure, the connector may be defined as a joint. The second heat insulator may include a portion extending in the same direction as the first heat insulator. The second heat insulator may include a portion extending in a different direction from the first heat insulator. The second heat insulator may include a portion connected to the first heat insulator, or may include a portion arranged to overlap the first heat insulator in at least one direction. The heat insulator may be a vacuum heat insulator including a vacuum space portion or a non-vacuum heat insulator not including a vacuum space portion. The heat insulator may be a combination of the vacuum heat insulator and the non-vacuum heat insulator. The vacuum space portion provided in the second heat insulator may include a portion extending in the same direction as the vacuum space portion provided in the first heat insulator. The vacuum space portion provided in the second heat insulator may include a portion extending in a different direction from the vacuum space portion provided in the first heat insulator. The vacuum space portion provided in the second heat insulator may include a portion arranged to overlap the vacuum space portion provided in the first heat insulator in at least one direction. The heat insulator may be provided in the form of a panel. In the present disclosure, a "panel" is described below as an example, but a disclosure in which the "panel" is replaced with the "heat insulator" may also be included in the present disclosure. For example, in the present disclosure, when it is described below that at least two panels of the main body form the exterior of the refrigerator, it may be understood or interpreted that at least two heat insulators of the main body form the exterior of the refrigerator.

Optionally, the refrigerator of the present disclosure may include a main body. The main body may include at least one storage chamber. The main body may include a partition wall dividing a first storage chamber and a second storage chamber. The first storage chamber joint may include a first first storage chamber joint, a second first storage chamber joint, and/or a third first storage chamber joint. The second storage chamber joint may be provided on one side of the second storage chamber. The second storage chamber joint may include a first joint, a second joint, and/or a third joint.

The partition wall may include the vacuum heat insulator and/or the non-vacuum heat insulator. The refrigerator of the present disclosure may include a door. The refrigerator of the present disclosure may include a machine room arranged on one side of the main body. At least one of a compressor, a heat-radiating component (for example, a condenser, a heat-radiating portion of a thermoelectric module, a heat sink for heat exchange with the heat-radiating portion of a thermoelectric module, or the like), and a cooling fan may be arranged in the machine room. The refrigerator may include at least one of a first cover (for example, a side cover) forming at least a portion of a first surface (for example, a side surface), a second cover (for example, a back cover) forming at least a portion of a second surface (for example, a rear surface), a third cover (for example, an upper cover) forming at least a portion of a third surface (for example, an upper surface), a fourth cover (for example, a bottom cover) forming at least a portion of a fourth surface (for example, a bottom surface), and a fifth cover (for example, a front cover) forming at least a portion of a fifth surface (for example, a front surface) for the machine room. One or more of the first, second, third, fourth, and fifth covers may be provided as a single component or in a plurality of components. The machine room may include the heat insulator in the refrigerator of the present disclosure.

The panel may include at least one of a first plate, a second plate, and a side plate. A vacuum space portion may be provided between the first plate and the second plate. The refrigerator of the present disclosure may include at least one panel. The present disclosure may include at least one of a first panel forming at least a portion of a first surface (for example, a side surface) of the refrigerator, a second panel forming at least a portion of a second surface (for example, a rear surface) of the refrigerator, a third panel forming at least a portion of a third surface (for example, an upper surface) of the refrigerator, a fourth panel forming at least a portion of a fourth surface (for example, a bottom surface) of the refrigerator, and a fifth panel forming at least a portion of a fifth surface (for example, a front surface) of the refrigerator. At least one of the first, second, third, fourth, and fifth surfaces of the refrigerator may provide at least a portion of a wall forming the main body or may provide at least a portion of a wall forming the door. At least one of the first, second, third, fourth, and fifth panels may be provided as a single component or may be provided in a plurality of components. The joint may be provided to connect the corner of the refrigerator or to connect a first wall and a second wall forming a wall of the refrigerator to each other. The joint may be provided to connect the panel to another component (for example, another panel). The joint may be provided to connect at least two of the first, second, third, fourth, and fifth panels. At least one of the first, second, third, fourth, and fifth panels may be provided as a plurality of panels, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to a corner of the first surface of the joint and/or a corner of the second surface of the joint. The third surface of the joint may be formed to be inclined to at least one of the first surface of the joint and the second surface of the joint. At least some of the first, second, third, fourth, and fifth panels may be provided as panels including a first insulation performance per unit thickness, and at least other some of the first, second, third, fourth, and fifth panels may be provided as panels including a second insulation performance per unit thickness. The first insulation performance and the second insulation performance may be different.

The heat insulator or refrigerator of the present disclosure may include a duct. The duct may include a first duct, a second duct, and/or a third duct. The first duct may supply cold air to the first storage chamber or the second storage chamber. The second duct may accommodate an evaporator. The third duct may be connected to the first duct and the second duct in communication with each other. The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may include a fourth surface. The fourth surface of the third duct may extend from the first surface of the third duct or may be arranged toward the second storage chamber. The fifth surface of the third duct may extend from the second surface of the third duct or may be arranged toward the evaporator.

The heat insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (for example, a left surface), a second surface (for example, a right surface), a third surface (for example, a rear surface), a fourth surface (for example, a lower surface), a fifth surface (for example, an upper surface), and a sixth surface (for example, a front surface). Some of the first, second, third, fourth, and fifth surface of the refrigerator may be provided in the form of panels, and other parts of the first, second, third, fourth, and fifth surfaces of the refrigerator may be provided in the form of blocks. The block may be provided as the non-vacuum heat insulator. For example, the block may be a block cover and/or a PU foam filling inside the block cover. The block may include at least one of a first block portion (for example, a side block portion), a second block portion (for example, a rear block portion or a front block portion), and a third block portion (for example, a bottom block portion or an upper block portion). Each of the first, second, and third block portions may be provided in a plurality of block portions. At least two of the first, second, and third block portions may be connected to provide the joint. The third block portion may form one surface of the first storage chamber and/or one surface of the machine room. The third block portion may be provided as a partition wall, or may form one surface of the first storage chamber.

The heat insulator or refrigerator of the present disclosure may include an insulating reinforcement portion. The insulating reinforcement portion may include a portion connected to one side of the block, or a portion formed to protrude from the block.

The heat insulator or refrigerator of the present disclosure may include a hinge. The hinge may be arranged on one side of the heat insulator. The hinge may be arranged on the main body and/or door of the refrigerator.

The hinge may include at least one of a hinge fixing portion which is a portion that the hinge is coupled to at least one of the heat insulator, the main body of the refrigerator, and the door of the refrigerator, a hinge shaft, and a hinge connecting portion which is a portion extending to protrude from the hinge fixing portion. The hinge may include at least one of a first hinge (for example, an upper hinge) arranged on one side of a wall forming the first storage chamber, a second hinge (for example, a middle hinge) arranged on the partition wall, and a third hinge (for example, a lower hinge) of the wall forming the second storage chamber. The heat insulator or the refrigerator of the present disclosure may include at least one of a hinge reinforcing frame that reinforces the strength of the hinge, a cover to which the hinge is coupled, and a hinge reinforcing plate that is arranged or accommodated so as to be connected to the panel. The hinge reinforcing frame may include at least one of a first, a second, a third, and a fourth frame portion. At least two of the first, second, third, and fourth frame portions may extend in different directions.

The heat insulator or refrigerator of the present disclosure may include a supporter frame. The supporter frame may support one surface of the panel. The supporter frame may include a coupling portion. The block may be supported by the supporter frame in the machine room. The supporter frame may include a first support frame and/or a second support frame.

The heat insulator or refrigerator of the present disclosure may include an inner cover. The inner cover may be arranged between the cover of the machine room and the hinge reinforcement frame (for example, the first frame portion).

The heat insulator or refrigerator of the present disclosure may include a decoration. The decoration may be arranged on the surface of the heat insulator. The decoration may be arranged on the surface of the main body and/or door of the refrigerator. For example, the decoration may be arranged on the outer surface of the heat insulator or the outer surface of the refrigerator.

The heat insulator or refrigerator of the present disclosure may include a hot line. The hot line may be arranged on the surface of the heat insulator. The decoration may be arranged on the surface of the main body and/or door of the refrigerator. The hot line may be arranged between the decoration and the surface of the heat insulator. The hot line may be arranged between the decoration and the surface of the refrigerator and/or between the decoration and the surface of the door.

The heat insulator or refrigerator of the present disclosure may include a casing. The casing may be an outer casing or an inner casing. The outer casing may be connected to the second plate. The outer casing may be provided to cover at least a portion of the second plate. The outer casing may be provided in contact with the second plate or spaced apart from the second plate by a predetermined distance. The inner casing may be connected to the first plate. The inner casing may be provided to cover at least a portion of the first plate. The inner casing may be provided in contact with the first plate or spaced apart from the first plate by a predetermined distance.

The heat insulator or refrigerator of the present disclosure may include a drawer and/or a drawer guide. The drawer guide may include a first storage chamber drawer guide provided in a first storage chamber. The first storage chamber drawer guide may include at least one of a first plate (for example, a side plate), a second plate (for example, a bottom plate), a third plate (for example, a top plate), and a fourth plate (for example, a middle plate).

The drawer guide may be provided with a second storage chamber drawer guide provided in the second storage chamber.

The heat insulator or refrigerator of the present disclosure may include a shelf and/or a shelf support frame.

[Details Description of the Disclosure] is divided into the aforementioned [common description] and the [description based on drawings] described below. In the [Details Description of the Disclosure], each of the specific details described for carrying out the disclosure may be understood as an embodiment of the present disclosure. In the [Details Description of the Disclosure], a content that combines at least two or more of the specific details described for carrying out the disclosure may also be understood as an embodiment of the present disclosure. For example, each paragraph and each combination of paragraphs in the [common description] section or the section described based on the drawings in the [Details Description of the Disclosure] may be understood as an embodiment of the present disclosure. As another example, each sentence and each combination of sentences in the [Common description] section or the section described based on the drawings in the [Details Description of the Disclosure] may be understood as an embodiment of the present disclosure.

Hereinafter, based on each drawing, the [description based on drawing] section describing the present disclosure will be described.

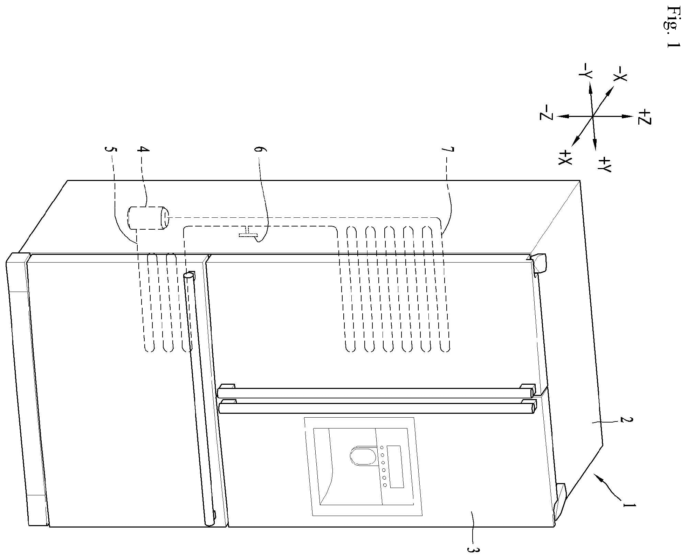

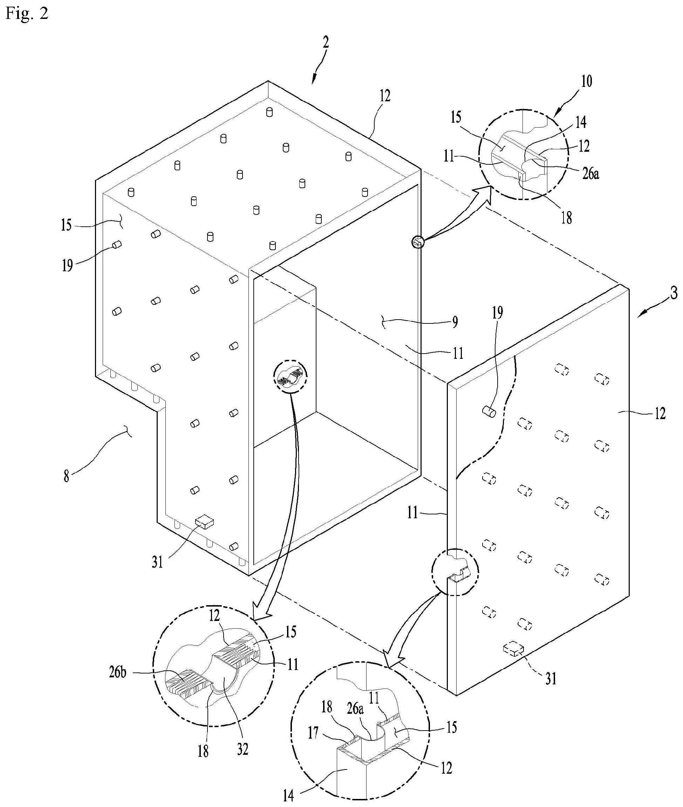

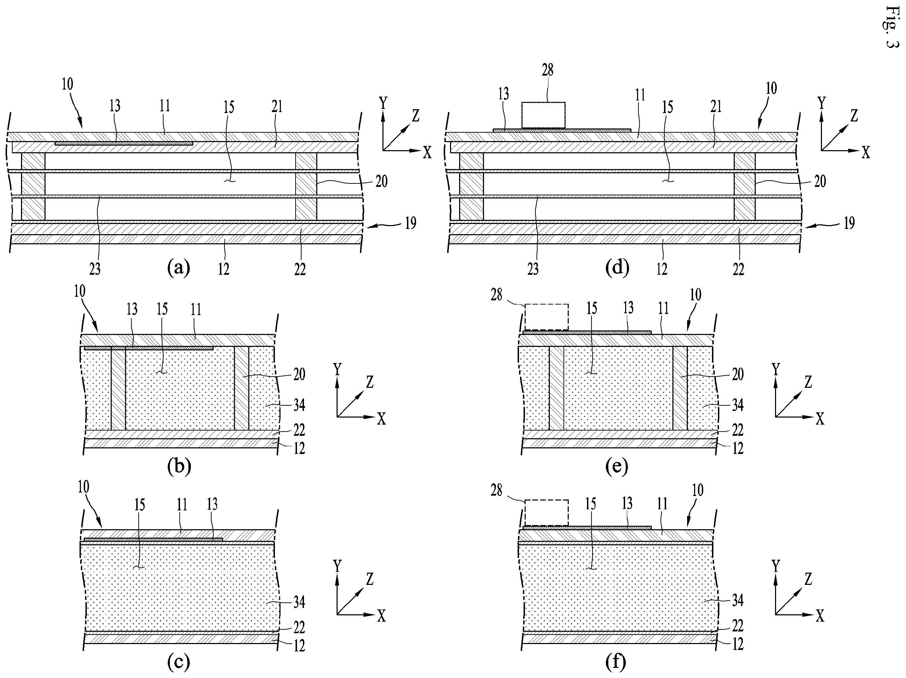

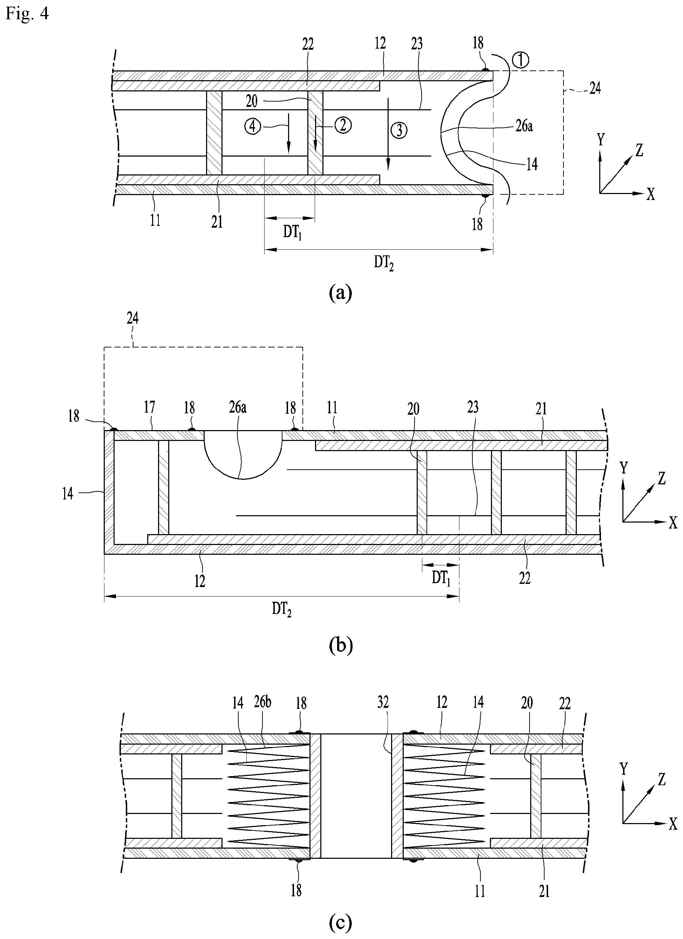

Referring to FIGS. 1 to 4, a heat insulator 10 of the present disclosure may include plates 11, 12, and 14. In the present disclosure, the term "plate" may mean at least one of the first and second plates 11 and 12 and the side plate 14. Optionally, the heat insulator of the present disclosure may include a vacuum space portion 15. The vacuum space portion 15 may be formed by walls provided by the plates 11, 12, and 14. The vacuum space portion 15 may include a thickness in a first direction. The plates 11, 12, and 14 may include a first plate 11 and a second plate 12. The first plate 11 may include a portion extending in a direction different from the first direction. The second plate 12 may include a portion extending in a first direction different from the first direction. Optionally, the plate may include a side plate 14 including a portion extending in the first direction. For example, the heat insulator 10 of the present disclosure may be provided such that the first and second plates 11 and 12 and the side plate 14 are each provided as separate components, and the separated components are connected to each other. As another example, the heat insulator 10 of the present disclosure may be provided such that at least two components among the first and second plates 11 and 12 and the side plate 14 are provided as an integral part, and the separated components are connected to each other. As yet another example, the heat insulator 10 of the present disclosure may be provided such that the portions connecting the first and second plates 11 and 12 and the side plate 14 to each other are each provided as an integral part. In this case, the first plate 11 may be provided as a separate component, and the separated components may be provided to be connected to each other. Alternatively, the second plates 12 may be provided as separate components, and the separated components may be provided to be connected to each other. Alternatively, the side plates 14 may be provided as separate components, and the separated components may be provided to be connected to each other. Optionally, the heat insulator 10 of the present disclosure may include a third plate that is arranged on at least a portion of the heat insulator 10 or connected to at least a portion of the plates 11, 12, and 14. The third plate may include a portion that is thinner or includes the same thickness as the plates 11, 12, and 14. The third plate may include a portion that is thicker than the plates 11, 12, and 14. The third plate may be arranged in the vacuum space portion 15 or may be arranged outside the vacuum space portion 15. Examples of the third plate may include the thermal insulators 23, 26a, 26b, and 34 and the deformation resistor 13 described in the present disclosure.

Optionally, the heat insulator 10 of the present disclosure may include thermal insulators 23, 26a, 26b, and 34 for reducing the amount of heat transfer between a first space provided near the first plate 11 and a second space provided near the second plate 12, or for reducing the amount of heat transfer between the first plate 11 and the second plate 12. A thermal insulator that reduces the amount of heat transfer by conduction may be defined as conduction resistance sheets 26a and 26b, and a thermal insulator that reduces the amount of heat transfer by radiation may be defined as a radiation resistance sheet 23. The thermal insulators 23, 26a, 26b, and 34 may be provided as a porous material 34 or as a filler 34. The filler whose interior is filled with a porous material can be defined as the porous material 34. The thermal insulators 23, 26a, 26b, and 34 may include at least one of the radiation resistance sheet 23, the porous material 34, the filler 34, and the conduction resistance sheets 26a and 26b, or a mixture of at least two of them. The thermal insulators 23, 26a, 26b, and 34 may be connected to at least a portion of the plates 11, 12, and 14 or may be provided so as not to come into contact with the plates 11, 12, and 14. A shield 24 may be provided on the outside of the thermal insulators 23, 26a, 26b, and 34 to provide insulation. A connecting frame 17 may be provided on the outside of the thermal insulators 23, 26a, 26b, and 34. The heat insulator 10 may include a conduit passing through the vacuum space portion 15. The conduit may be formed by providing a pipe wall 32 as a separate component, or may be provided in a form in which the pipe wall 32 is deleted and only a through hole is formed in the plate. The side plate 14 may be provided near the conduit, or the thermal insulators 23, 26a, 26b, and 34 may be provided.

Optionally, the heat insulator 10 of the present disclosure may include a deformation resistor 13 connected to at least some of the plates 11, 12, and 14 to increase the degree to deformation resistance of the plates 11, 12, and 14. When the deformation resistor is provided in the form of a plate, the deformation resistor may be referred to as a deformation resistance plate.

Optionally, the heat insulator 10 of the present disclosure may include a supporter 19 connected to at least some of the plates 11, 12, and 13 and maintaining the vacuum space portion 15. The supporter 19 may include a bar 20 including a portion extending in a first direction, which is a thickness direction of the vacuum space portion 15. The supporter 19 may include a supporter plate 22 including a portion extending in a direction different from the first direction. The supporter 19 may include a plurality of bars 20 and a connecting plate 21 connecting the plurality of bars 20. The supporter 19 may include at least one of the bar 20, the connecting plate 21, and the supporter plate 22, or a mixture of at least two of them.

Optionally, the heat insulator 10 of the present disclosure may include a component coupling portion that provides a portion where the components 24, 28, and 32 are arranged or supported. For example, when the component coupling portion is provided in the form of a plate, the component coupling portion may be referred to as a component coupling portion plate. The component connected to the component coupling portion may include a through component that is arranged to pass through at least a portion of the heat insulator 10 or at least some of the plates 11, 12, and 14. The component connected to the component coupling portion may include a surface component that is arranged to be connected to the surface of the heat insulator 10 or to be connected to the surfaces of the plates 11, 12, and 14. The through component may be a component that forms a path through which a fluid (electricity, refrigerant, water, air, or the like) passes. The through component may be provided in the form of a tube. The tube may include a straight tube and/or a curved tube. The tube may be provided in a plurality of tubes or may extend in one direction. The through component may include at least one of the tube, the first outlet portion, and the second outlet portion. In the present disclosure, the fluid is defined as all types of flowing objects. The fluid includes moving solids, liquids, gases, and electricity. The through component may be a component that forms a path through which a refrigerant for heat exchange passes, such as a Suction Line Heat Exchanger (SLHX) or a refrigerant pipe. The SLHX may be understood as a suction line heat exchanger that causes heat exchange between the refrigerant that has passed through the evaporator and the refrigerant before being introduced into the evaporator. The through component may be a wire that supplies electricity to the apparatus. The through component may be a component that forms a path through which air can pass, such as a duct or port through which a fluid flows along the surface of the through component. The port may include an exhaust port that provides a path through which air is exhausted from a space formed between the first plate 11 and the second plate 12 to form the vacuum space portion 15. The through component may be paths through which fluids such as coolant, hot water, ice, and defrost water may pass. Examples of the surface component may include a peripheral insulating material, a side panel, an injected foam, a pre-prepared resin, a hinge, a latch, a basket, a drawer, a shelve, lighting, a sensor, an evaporator 7, a front decoration, a hot line, a heater, an exterior cover, and an interior cover.

Through FIGS. 1 to 4, terms such as the plate, the first plate, the second plate, the side plate, the third plate, the vacuum space portion, the thermal insulator, the conduction resistance sheet, the radiation resistance sheet, the porous material, the filler, the component coupling portion, the joint, the supporter, the bar, the supporter plate, the connecting plate, the deformation resistor, the deformation resistance plate, the component coupling portion, the component coupling portion plate, the through component, the surface component, the duct, the port, or the like are defined. In the present disclosure, when the above terms are used in parts other than the parts described with respect to FIGS. 1 to 4, the terms used should be interpreted as defined in FIGS. 1 to 4.

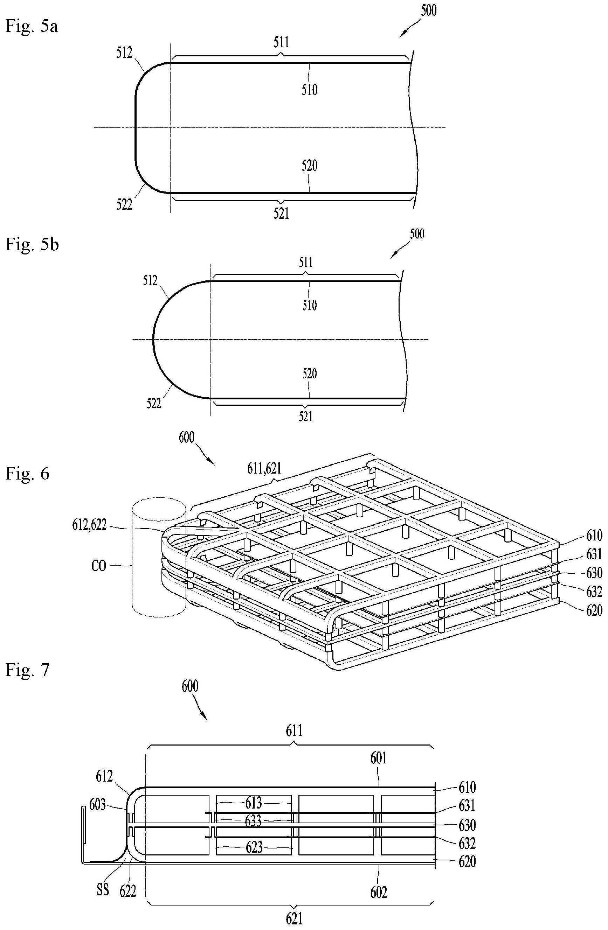

In the present disclosure, that object A is connected to object B may be defined to mean that at least a portion of the object A and at least a portion of the object B are directly connected, or that at least a portion of the object A and at least a portion of the object B are connected via an intermedium between the objects A and B. In a modification example, the object A being connected to the object B may include a case in which the object A and the object B are prepared as a single body in a shape in which they are connected in the above-described manner. In the present disclosure, examples of connection can be support, combine, and seal, which will be described later. In the present disclosure, the phrase "object A is supported by the object B" may be defined to mean that the object A is restricted from moving in one or more of +X, -X, +Y, -Y, +Z, and -Z axis directions by the object B. In the present disclosure, examples of support may be coupling and sealing, which will be described later. In the present disclosure, the phrase "object A is combined with the object B" may be defined to mean that the object A is restricted from moving in one or more of the X, Y, and Z-axis directions by the object B. In the present disclosure, an embodiment of the combination may be a sealing, which will be described later. In the present disclosure, the phrase "object A is sealed with the object B" may be defined to mean that movement of fluid is not permitted at a portion where the object A and object B are connected. In the present disclosure, at least one object, that is, at least a portion of the object A and the object B, may be defined as including a portion of the object A, the entirety of the object A, a portion of the object B, the entirety of the object B, a portion of the object A and a portion of the object B, a portion of the object A and the entirety of the object B, the entirety of the object A and a portion of the object B, and the entirety of the object A and the entirety of the object B. In the present disclosure, the phrase "plate A may be a wall defining space A" may be defined to mean that at least a portion of the plate A may be a wall forming at least a portion of the space A. That is, at least a portion of the plate A may be the wall forming the space A, or the plate A may be the wall forming at least a portion of the space A. In the present disclosure, the central portion of an object may be defined as a portion positioned at the center among three portions obtained by dividing the object into three equal parts along a longitudinal direction of the object. The periphery of an object may be defined as a portion positioned on one side or the other of a central portion among three portions obtained by dividing the object into three equal parts. The periphery of an object may include a surface in contact with the central portion and a surface opposite thereto. The opposite surface may be defined as the border or corner of the object. In the present disclosure, a degree to deformation resistance indicates the degree to which an object resists deformation, and may be defined as a value determined by the shape including the thickness of the object, the material of the object, and the processing method of the object. In the present disclosure, a degree of heat transfer resistance indicates the degree to which an object resists heat transfer, and may be defined as a value determined by the shape including the thickness of the object, the material of the object, and the processing method of the object. In the present disclosure, a degree of heat transfer resistance may be defined as at least one of a degree of conduction resistance, a degree of radiation resistance, and the degree of convection resistance or a sum of at least two or more thereof. The terms "upper side", "lower side", "right side", "left side", "front side", and "rear side" used in the following description will be understood through the coordinate system illustrated in FIGS. 1 and 5. An example of the "+Z" means the "upper side", an example of the "-Z" means the "lower side", an example of the "+Y" means the "right side", an example of the "-Y" means the "left side", an example of the "+X" means the "front side", and an example of the "-X" means the "rear side". A front-rear direction used in the present specification may be an example of the X-axis direction, a left-right direction may be an example of the Y-axis direction, and an up-down direction may be an example of the Z-axis direction.

The heat insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air (cold) to the cavity 9 may be provided. For example, the cold source may be an evaporator 7 that evaporates a refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

Hereinafter, embodiments of a heat insulator to be provided in the present specification will be described with reference to FIGS. 5 to 10. As illustrated in FIGS. 5a and 5b, the supporter may be connected to or supported by a first plate or a side plate. The supporter may be inserted into a space formed by the first plate or the side plate, and/or may be connected to each of the first plate or the side plate, and/or may support each of the first plate or the side plate. Here, the first plate may be the upper plate of the heat insulator 500, the second plate may be the lower plate of the heat insulator 500, and the side plate may be the side plate of the heat insulator 500. The first plate may be the lower plate of the heat insulator 500, the second plate may be the upper plate of the heat insulator 500, and the side plate may be the side plate of the heat insulator 500. In the heat insulator 500, the first plate and the second plate may be arranged to be spaced apart from each other, and the side plate may be connected to one side of the first plate and/or one side of the second plate. The side plate connects the first plate and/or the second plate on one side of the first plate and/or one side of the second plate, and/or seals the space between the first plate and the second plate, thereby forming a vacuum in the space. Accordingly, the heat insulator 500 may insulate heat by forming the air pressure of the space lower than the external air pressure. Meanwhile, the side plate may also mean a portion connected in a form in which the first plate and the second plate form an arch-shaped curved surface in a direction in which the first and second plates approach each other and/or are gently bent.

The supporter may be formed with a structure as illustrated in FIGS. 5a and 5b, and may be inserted between the first plate and the second plate in the heat insulator 500 to support the space. The supporter may include a first supporter 510. The first supporter 510 may be formed in a lattice shape. The first supporter 510 may include one surface connected to one surface of the first plate or include a portion that supports the first plate. The supporter may include a second supporter 520. The second supporter 520 may be formed in a lattice shape at least partially identical to the first supporter 510. The second supporter 520 may include one surface connected to one surface of the second plate or include a portion that supports the second plate. One or more of the first supporter 510 and the second supporter 520 may include bent surfaces 512 and 522 formed on one side. The bent surfaces 512 and 522 are characterized in that the bent surfaces are connected to one surface of the side plate or supports the side plate. That is, the supporter portion formed by the bent surfaces 512 and 522 is connected to or supports the side surface where the first plate and the second plate are connected to the side plate, thereby forming a side support structure. In this way, due to the side support structure of the supporter, even when a lateral load is applied to the heat insulator 500, the spacer can be prevented from collapsing.

The supporter may include central portions 511 and 521 or side surfaces 512 and 522. The central portions 511 and 521 may support at least one of the first plate and the second plate. The side surfaces 512 and 522 may support the side plate. In the supporter, a portion that supports a flat portion of the first plate and/or the second plate may include the central portions 511 and 521, or a portion that supports a curved surface of the side plate may include side surfaces 512 and 522. That is, the first supporter 510 may include a first central portion 511 formed in a flat shape to support a flat portion of the first plate. The first supporter 510 may include a first side surface 512 that is formed in a bent shape and/or supports a portion of a curved surface of the side plate. The second supporter 520 may include a second central portion 521 formed in a flat surface to support a flat portion of the second plate. The second supporter 520 may include a second side surface 522 formed in a bent surface to support a portion of a curved portion of the side plate. Meanwhile, the side surfaces 512 and 522 may be formed with a curved surface only in a specific portion as illustrated in FIG. 5a, and the remaining portions may be formed as flat surfaces. Alternatively, as illustrated in FIG. 5b, the first side surface 512 and/or the second side surface 522 may be formed in an arc shape, such that the two side surfaces 512 and 522 meet to form an arch.

A specific embodiment of the heat insulator 500 formed with the supporter may be as illustrated in FIGS. 6 and 7, or FIGS. 8 to 10.

The heat insulator 600 supports the first plate and the side plate by inserting the supporter including the structure illustrated in FIG. 6 into the space.

The heat insulator 600, as illustrated in FIGS. 6 and 7, includes a first plate 601. The heat insulator 600 includes a second plate 602 arranged to be spaced apart from the first plate 601. The heat insulator 600 includes a side plate 603 connecting the first plate 601 and/or the second plate 602 on one side of the first plate 601 and/or one side of the second plate 602. The heat insulator 600 includes a first supporter 610 formed in a lattice shape and including one surface supporting the first plate 601. The heat insulator 600 includes a second supporter 620 formed in a lattice shape that is at least partially identical to the first supporter 610 and including one surface supporting the second plate 602. The heat insulator 600 includes a third supporter 630 that is coupled to at least one of the first supporter 610 and the second supporter 620 between the first supporter 610 and the second supporter 620 and/or supports at least one of the first supporter 610 and the second supporter 620. The first supporter 610, the second supporter 620 and/or the third supporter 630 may be coupled to the supporter as illustrated in FIG. 6.

Meanwhile, in the heat insulator 600, one surface of the first plate 601 and/or one surface of the second plate 602 may be surfaces forming the space. When the first plate 601 is an upper plate and the second plate 602 is a lower plate, one surface of the first plate 601 may be a lower surface facing the space, and one surface of the second plate 602 may be an upper surface facing the space. Accordingly, the first supporter 610 may include one surface connected to the lower surface of the first plate 601 in the space, and the other surface facing the second supporter 620, and the second supporter 620 may include one surface connected to the upper surface of the second plate 602 in the space, and the other surface facing the first supporter 610.

In the heat insulator 600, one or more of the first supporter 610 and the second supporter 620 may include bent surfaces 612 and 622 formed on at least one side. The bent surfaces 612 and 622 is connected to one surface of the side plate 603 or supports the side plate 603. Preferably, both the first supporter 610 and the second supporter 620 may include the bent surfaces 612 and 622 formed on at least one side. That is, the heat insulator 600 may include the bent surfaces 612 and 622 formed on a portion corresponding to a side surface, so that the side surface may be supported by the bent surfaces 612 and 622. In particular, as illustrated in FIG. 6, a corner CO portion where two side surfaces meet is formed in a round shape where the two side surfaces continue in a curved shape, so that the corner CO portion can be supported in a round shape.

The heat insulator 600 may include central portions 611 and 621 or side surfaces 612 and 622. The central portions 611 and 621 may support at least one of the first plate 601 and the second plate 602. The side surfaces 612 and 622 may support the side plate 603 or a curved portion of the side plate 603. The central portions 611 and 621 may include the first central portion 611 connected to or supported by a portion or a flat portion of the first plate 601 at the first supporter 610. The central portions 611 and 621 may include the second central portion 621 connected to or supported by a portion or a flat portion of the second plate 602 at the second supporter 620. The side surfaces 612 and 622 may include the first side surface 612 that is connected to or supported by the curved portion of the first plate 601 at the first supporter 610, or by a portion of the side plate 603. The side surfaces 612 and 622 may include the second side surface 622 that is connected to or supported by the curved portion of the second plate 602 at the second supporter 620, or by another portion of the side plate 603.

The first supporter 610 and the second supporter 620 may be formed with different lattice shapes. For example, the first supporter 610 may be formed with a first lattice shape, and/or the second supporter 620 may be formed with a second lattice shape that is partially similar to the first lattice shape, or a third lattice shape that is different from the first lattice shape. The first supporter 610 and the second supporter 620 may preferably be formed with the same lattice shape. More specifically, when the first supporter 610 and the second supporter 620 face each other, the lattice shapes may be identically symmetrical. Accordingly, the difference between the supporting force of the first supporter 610 supporting the first plate 601 on one surface of the first plate 601 and the supporting force of the second supporter 620 supporting the second plate 602 on one surface of the second plate 602 may be formed within a certain range. This may mean that the first supporter 610 and the second supporter 620 are produced in the same process or are the same product.

The first supporter 610 and the second supporter 620 may be formed in a symmetrical shape when facing each other. For example, when the first supporter and the second supporter are coupled while facing each other as illustrated in FIG. 6, they may be formed in a symmetrical shape. That is, the first side surface 612 of the first supporter 610 and the second side surface 622 of the second supporter 620 may be formed in the same direction, and when coupled as illustrated in FIG. 6, they may be formed in a symmetrical shape. This may mean that the first supporter 610 and the second supporter 620 are formed in the same process, but the first side surface 612 and the second side surface 622 are formed in opposite directions.

The first supporter 610 may include the first central portion 611 connected to or supported by the first plate 601. The first supporter 610 may include the first side surface 612 connected to or supported by one surface of the side plate 603 on one side of the first central portion 611. The first supporter 610 may include a first space coupler 613 protruding from the first central portion 611 and coupled with the third supporter 630. That is, the first supporter 610 may be divided into the first central portion 611 and the first side surface 612. The first supporter 610 may be coupled to the third supporter 630 through the first space coupler 613 protruding from the first central portion 611.

The first central portion 611 may support the first plate 601 and/or the first side surface 612 may support the side plate 603. Accordingly, the first supporter 610 may support one surface and the side surface of the first plate 601 in the heat insulator 600.

The first space coupler 613 may be a coupler protruding from the first central portion 611 toward the third supporter 630. The first space coupler 613 may be configured to be coupled with the supporter coupling portion 633 of the third supporter 630, and may be coupled to the third supporter 630 through the supporter coupling portion 633. For example, the first space coupler 613 may be formed as a female portion, and the supporter coupling portion 633 may be formed as a male portion, so that the first space coupler 613 and the supporter coupling portion 633 may be male-female coupled. Alternatively, the first space coupler 613 may be formed as a male portion, and the supporter coupling portion 633 may be formed as a female portion, so that the first space coupler 613 and the supporter coupling portion 633 may be male-female coupled. Preferably, the first space coupler 613 may be formed as a male portion, and the supporter coupling portion 633 may be formed as a female portion. The first space coupler 613 may protrude from the first central portion 611 at predetermined intervals. A plurality of the first space coupler 613 may be provided. A plurality of the supporter coupling portion 633 may be provided. The plurality of first space couplers 613 may protrude in the same shape. In this case, the plurality of support couplers 633 may be arranged at the same interval as the plurality of first space couplers 613. In this way, when the plurality of first space couplers 613 are connected to the plurality of support couplers 633, a plurality of pillars supporting the first supporter 610 and/or the third supporter 630 may be formed between the first supporter 610 and the third supporter 630.

The second supporter 620 may include the second central portion 621 connected to or supported by the second plate 602. The second supporter 620 may include the second side surface 622 connected to or supported by one surface of the side plate 603 on one side of the second central portion 621. The second supporter 620 may include a second space coupler 633 protruding from the second central portion 621 and coupled to the third supporter 630. That is, the second supporter 620 may be divided into the second central portion 621 and the second side surface 622. The second supporter 620 may be coupled to the third supporter 630 through the second space coupler 623 protruding from the second central portion 621.

The second central portion 621 may support the second plate 602 and/or the second side surface 622 may support the side plate 603. Accordingly, the second supporter 620 may support one surface and the side surface of the second plate 602 in the heat insulator 600.

The second space coupler 623 may be a coupler protruding from the second central portion 621 toward the third supporter 630. The second space coupler 623 may be configured to be coupled with the supporter coupling portion 633 of the third supporter 630, and may be coupled to the third supporter 630 through the supporter coupling portion 633. For example, the second space coupler 623 may be formed as a female portion, and the supporter coupling portion 633 may be formed as a male portion, so that the second space coupler 623 and the supporter coupling portion 633 may be male-female coupled. Alternatively, the second space coupler 623 may be formed as a male portion, and the supporter coupling portion 633 may be formed as a female portion, so that the second space coupler 623 and the supporter coupling portion 633 may be male-female coupled. Preferably, the second space coupler 623 may be formed as a male portion, and the supporter coupling portion 633 may be formed as a female portion. A plurality of the second space coupler 623 may be provided. A plurality of the supporter coupling portion 633 may be provided. The plurality of second space couplers 623 may protrude from the second central portion 621 at predetermined intervals. The plurality of second space couplers 623 may protrude in the same shape. In this case, the plurality of support couplers 633 may be arranged at the same interval as the plurality of second space couplers 623. In this way, when the plurality of second spacer coupling parts 623 are coupled with the plurality of support couplers 633, a plurality of pillars supporting the second supporter 620 and/or the third supporter 630 may be formed between the second supporter 620 and the third supporter 630.

The third supporter 630 may be arranged between the first supporter 610 and the second supporter 620. The third supporter 630 may be arranged to include the same distance from each of the first supporter 610 and the second supporter 620. That is, the third supporter 630 may be arranged at a position corresponding to the center (for example, the exact center) between the first supporter 610 and the second supporter 620. The third supporter 630 may be arranged at a position corresponding to the middle between the first supporter 610 and the second supporter 620 and/or may be coupled with the first supporter 610 and/or the second supporter 620. For example, when the first plate 601 corresponds to the upper plate and the second plate 602 corresponds to the lower plate, the upper surface of the third supporter 630 may face the lower surface of the first supporter 610 and be coupled with the first supporter 610, and the lower surface of the third supporter 630 may face the upper surface of the second supporter 620 and be coupled with the second supporter 620. Accordingly, the third supporter 630 may support the first supporter 610 and/or the second supporter 620 between the first supporter 610 and the second supporter 620.

The third supporter 630 may include a plurality of support couplers 633 protruding from each of both surfaces, or may be coupled to the first supporter 610 and/or the second supporter 620 through the plurality of support couplers 633. The third supporter 630 may include a first support coupler protruding from one surface facing the first supporter 610, or male-female coupled with the first space coupler 613, and/or a second support coupler 633 protruding from the other surface facing the second supporter 620, or male-female coupled with the second space coupler 623. That is, the third supporter 630 may protrude toward the supporter coupling portion 633 from one surface and coupled with the first space coupler 613 of the first supporter 610 and the first support coupler 633 on the one surface, and/or may protrude toward the second support coupler 633 from the other surface and coupled with the second space coupler 623 of the second supporter 620 and the second support coupler 633 on the other surface. In this case, the first space coupler 613 and the second space coupler 623 may protrude at the same interval, and/or the supporter coupling portion 633 may protrude at the same interval as the first space coupler 613 and the second space coupler 623. The supporter coupling portion 633 may be formed as a male portion when the first space coupler 613 and the second space coupler 623 are formed as female portions, and may be formed as a female portion when the first space coupler 613 and the second space coupler 623 are formed as male portions, so that the first space coupler 613 and the second space coupler 623 may be male-female coupled. In this way, the supporter coupling portion 633 may be coupled to the first space coupler 613 and the second space coupler 623, thereby forming a pillar between the first supporter 610 and the second supporter 620 that supports the first supporter 610 and the second supporter 620.

Meanwhile, the third supporter 630 may further include a first shielding portion 631 that is arranged between the first supporter 610 and the third supporter 630 and/or divides the space between the first supporter 610 and the third supporter 630 into two or more regions. The third supporter 630 may further include a second shielding portion 632 that is arranged between the second supporter 620 and the third supporter 630 and/or divides the space between the second supporter 620 and the third supporter 630 into two or more regions. That is, the third supporter 630 may further include one or more of the first shielding portion 631 and the second shielding portion 632. The third supporter 630 may preferably include each of the first shielding portion 631 and the second shielding portion 632. Meanwhile, the length of the first shielding portion 631 and/or the second shielding portion 632 may be formed to be less than the length of the first supporter 610 and/or the second supporter 620. That is, the first shielding portion 631 and/or the second shielding portion 632 may be formed to include a length that is not connected to the side surfaces 612 and 622. For example, as illustrated in FIG. 7, the first shielding portion 631 and/or the second shielding portion 632 may be formed to be less than the length of the lattice corresponding to the side surfaces 612 and 622. In this case, the length by which the first shielding portion 631 and/or the second shielding portion 632 protrudes from the lattice toward the side surfaces 612 and 622 may be formed within a certain range. For example, the length may be less than half the length of the lattice. Accordingly, as illustrated in FIG. 7, the first shielding portion 631 and/or the second shielding portion 632 may be unconnected to the side surfaces 612 and 622, thereby preventing damage of the first shielding portion 631 and/or the second shielding portion 632 due to a load applied to the side surfaces 612 and 622.

In this way, the heat insulator 600 may be configured to form the supporter as illustrated in FIG. 6 by coupling the first supporter 610, the second supporter 620, and the third supporter 630 through the coupling of the first space coupler 613, the second space coupler 623, and the coupling portion 633. This support may be inserted into the space formed by the first plate 601 to the side plate 603 in a sliding manner, or the supporter may be sealed in a state of being positioned in the space.

In the heat insulator 600, in a case where the bent surfaces 612 and 622 and the side plate 603 are connected, as illustrated in FIG. 7, a gap SS including a predetermined area may be formed between the bent surfaces 612 and 622 and the side plate 603. Due to the gap SS, the thermal conduction between the side plate 603 and the bent surfaces 612 and 622 may be reduced.

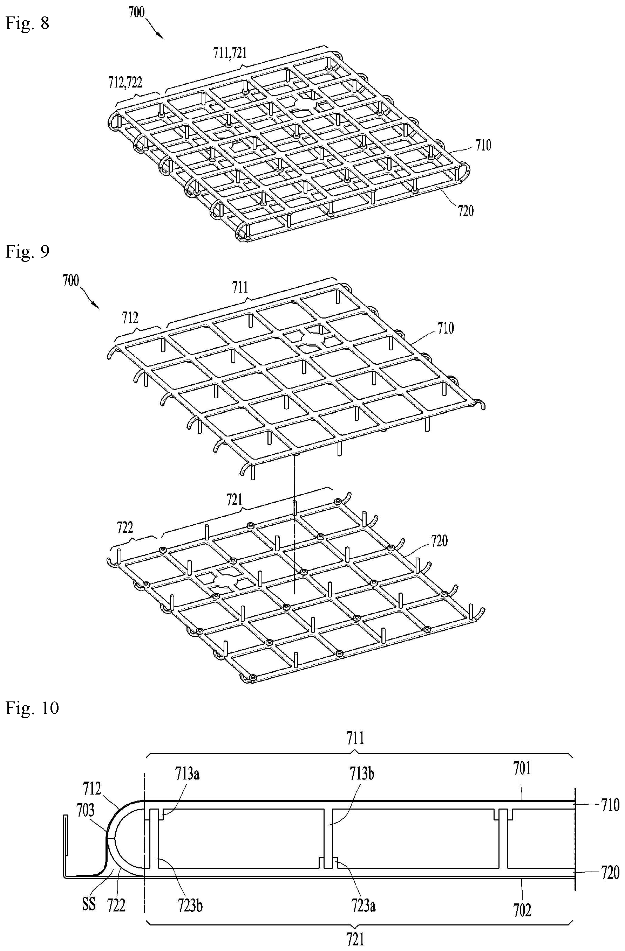

Meanwhile, as another embodiment of a heat insulator 700, the supporter including a structure as illustrated in FIGS. 8 and 9 is inserted into the space to support the first plate or the side plate.

The heat insulator 700 includes a first plate 701, as illustrated in FIGS. 8 to 10. The heat insulator 700 includes a second plate 702 arranged to be spaced apart from the first plate 701. The heat insulator 700 includes the side plate 703 connecting the first plate 701 and/or the second plate 702 on one side of the first plate 701 and/or one side of the second plate 702. The heat insulator 700 includes a first supporter 710 formed in a lattice shape and including one surface connected to one surface of the first plate 701 and the other surface coupled to the other surface of the second supporter 720 to support the first plate 701. The heat insulator 700 includes the second supporter 720 formed in a lattice shape that is at least partially identical to the first supporter 710 and including one surface connected to one surface of the second plate 702 and the other surface coupled to the other surface of the first supporter 710 to support the second plate 702.

Here, the first supporter 710 and/or the second supporter 720 may be coupled with the supporter as illustrated in FIGS. 7 and 8.

Meanwhile, in the heat insulator 700, one surface of the first plate 701 and/or one surface of the second plate 702 may be surfaces forming the space. When the first plate 701 is an upper plate and the second plate 702 is a lower plate, one surface of the first plate 701 may be a lower surface facing the space, and one surface of the second plate 702 may be an upper surface facing the space. Accordingly, the first supporter 710 may include one surface connected to the lower surface of the first plate 701 in the space, and/or the other surface facing the second supporter 720. The second supporter 720 may include one surface connected to the upper surface of the second plate 702 in the space, and/or the other surface facing the first supporter 710.

In the heat insulator 700, one or more of the first supporter 710 and the second supporter 720 includes bent surfaces 712 and 722 formed on at least one side, and/or the bent surfaces 712 and 722 supports a side plate 703 connecting the first plate 701 and/or the second plate 702. Preferably, both the first supporter 710 and the second supporter 720 may include the bent surfaces 712 and 722 formed on at least one side. That is, the heat insulator 700 may include the bent surfaces 712 and 722 formed on a portion corresponding to a side surface, so that the side surface may be supported by the bent surfaces 712 and 722.

The heat insulator 700 may include central portions 711 and 721 supporting flat portions of the first plate 701 and/or the second plate 702, and/or may include side surfaces 712 and 722 supporting a curved portion of the side plate 703. The central portions 711 and 721 may include the first central portion 711 connected to the flat portion of the first plate 701 at the first supporter 710. The central portions 711 and 721 may include the second central portion 721 connected to the flat portion of the second plate 702 at the second supporter 720. The side surfaces 712 and 722 may include the first side surface 712 that is connected to a curved portion of the first plate 701 at the first supporter 710, that is, a portion of the side plate 703. The side surfaces 712 and 722 may include the second side surface 722 that is connected to a curved portion of the second plate 702 at the second supporter 720, that is, another portion of the side plate 703.

The first supporter 710 and the second supporter 720 may be formed in different lattice shapes. For example, the first supporter 710 may be formed in a first lattice shape, and/or the second supporter 720 may be formed in a second lattice shape that is partially similar to the first lattice shape, or in a third lattice shape that is different from the first lattice shape.

The first supporter 710 and the second supporter 720 may be formed in an asymmetrical shape when facing each other. For example, when the first and second supporters are coupled while facing each other as illustrated in FIG. 8, they may be formed in an asymmetrical shape. That is, the first side surface 712 of the first supporter 710 and the second side surface 722 of the second supporter 720 may be formed in the same one-sided direction, and when coupled as illustrated in FIG. 8, they may be formed in an asymmetrical shape.

The first supporter 710 may include the first central portion 711 connected to or supported by the first plate 701. The first supporter 710 may include the first side surface 712 connected to or supported by one surface of the side plate 703 on one side of the first central portion 711. The first supporter 710 may include a first space coupler 713 protruding from the first central portion 711 and coupled to the second supporter 720. That is, the first supporter 710 may be divided into the first central portion 711 and the first side surface 712. The first supporter 710 may be coupled to the second supporter 720 through the first space coupler 713 protruding from the first central portion 711.

The first central portion 711 may support the first plate 701 and/or the first side surface 712 may support the side plate 703. Accordingly, the first supporter 710 may support one surface and the side surface of the first plate 701 in the heat insulator 700.

The first space coupler 713 may be a coupler protruding from the first central portion 711 toward the second supporter 720. The first space coupler 713 may be configured to be coupled with the second space coupler 723 of the second supporter 720, and may be coupled to the second supporter 720 through the second space coupler 723. A plurality of the first space couplers 713 may be provided. Each of the plurality of first space couplers 713 may be configured with one of a female portion 713a and a male portion 713b. That is, the plurality of first space couplers 713 may include one or more female portions 713a and one or more male portions 713b. For example, some coupling portions of the plurality of first space couplers 713 may be formed as female portions 713a, and the remaining coupling portions may be formed as male portions 713b, and some coupling portions of the plurality of second space couplers 723 may be formed as male portions 723b, and the remaining coupling portions may be formed as female portions 723a. Therefore, each of some coupling portions 713a of the plurality of first space couplers 713 and each of some coupling portions 723b of the plurality of second space couplers 723 may be formed as male and female couplings, and each of the remaining coupling portions 713b of the plurality of first space couplers 713 and each of the remaining coupling portions 723a of the plurality of second space couplers 723 may be formed as male and female couplings. Preferably, the plurality of first space couplers 713 may be formed in an alternating manner in the order of the female portion 713a and the male portion 713b, and the plurality of second space couplers 723 may be formed in an alternating manner in the order of the male portion 723b and the female portion 723a. The plurality of first space couplers 713 may protrude from the first central portion 711 at predetermined intervals. The female portion coupling portions 713a of the plurality of first space couplers 713 may protrude in the same shape, and the male portion coupling portions 713b may protrude in the same shape. In this case, the plurality of second space couplers 723 may be arranged at the same interval as the plurality of first space couplers 713. In this way, when the plurality of first space couplers 713 are coupled with the plurality of second space couplers 723, a plurality of pillars supporting the first supporter 710 and the second supporter 720 may be formed between the first supporter 710 and the second supporter 720.

The second supporter 720 may include the second central portion 721 connected to or supported by the second plate 702. The second supporter 720 may include the second side surface 722 connected to or supported by one surface of the side plate 703 on one side of the second central portion 721. The second supporter 720 may include the second space coupler 723 protruding from the second central portion 721 and coupled to the first supporter 710. That is, the second supporter 720 may be divided into the second central portion 721 and the second side surface 722. The second supporter 720 may be coupled to the first supporter 710 through the second space coupler 723 protruding from the second central portion 721.

The second central portion 721 may support the second plate 702 and/or the second side surface 722 may support the side plate 703. Accordingly, the second supporter 720 may support one surface and the side surface of the second plate 702 in the heat insulator 700.

The second space coupler 723 may be a coupler protruding from the second central portion 721 toward the first supporter 710. The second space coupler 723 may be configured to be coupled with the second space coupler 713 of the first supporter 710, and may be coupled to the first supporter 710 through the first space coupler 713. A plurality of the second space couplers 723 may be provided. Each of the plurality of second space couplers 723 may be configured with one of a female portion 723a and a male portion 723b. That is, the plurality of second space couplers 723 may include one or more female portions 723a and one or more male portions 723b. For example, some coupling portions of the plurality of second space couplers 723 may be formed as male portions 723b and the remaining coupling portions may be formed as female portions 723a, and some coupling portions of the plurality of first space couplers 713 may be formed as female portions 713a and the remaining coupling portions may be formed as male portions 713b. Therefore, each of some coupling portions 723b of the plurality of second space couplers 723 and each of some coupling portions 713a of the plurality of first space couplers 713 may be male-female coupled, and each of the remaining coupling portions 723a of the plurality of second space couplers 723 and each of the remaining coupling portions 713b of the plurality of first space couplers 713 may be male-female coupled. Preferably, the plurality of second space couplers 723 may be formed in an alternating manner in the order of the male portion 723b and the female portion 723a, and the plurality of first space couplers 713 may be formed in an alternating manner in the order of the female portion 713a and the male portion 713b. The plurality of second space couplers 723 may protrude from the second central portion 721 at predetermined intervals. The female portion coupling portions 723b of the plurality of second space couplers 723 may protrude in the same shape, and the male portion coupling portions 723a may protrude in the same shape. In this case, the plurality of first space couplers 713 may be arranged at the same interval as the plurality of second space couplers 723. In this way, when the plurality of second space couplers 723 are coupled with the plurality of first space couplers 713, a plurality of pillars that support the first supporter 710 and the second supporter 720 may be formed between the first supporter 710 and the second supporter 720.

Each of the plurality of first space couplers 713 and the plurality of second space couplers 723 may be arranged in a plurality of rows and a plurality of columns according to the lattice shape and protrude. That is, each of the plurality of first space couplers 713 and the plurality of second space couplers 723 may protrude in an M x N matrix shape from each of the first supporter 710 and the second supporter 720 formed in the lattice shape. Accordingly, each of the plurality of first space couplers 713 and the plurality of second space couplers 723 may protrude in an M x N number from each of the first supporter 710 and the second supporter 720.

Each of the plurality of first space couplers 713 and the plurality of second space couplers 723 may alternately protrude in a first coupler shape and a second coupler shape different from the first coupler shape according to the arrangement according to the lattice shape. For example, when a coupling portion corresponding to the first row and the first column among the plurality of first space couplers 713 protrudes in the first coupler shape, a coupling portion corresponding to the first row and the second column may protrude in the second coupler shape, and a coupling portion corresponding to the first row and the third column may protrude the first coupler shape. In this case, a coupling portion corresponding to the second row and the first column may also protrude in the second coupler shape, and a coupling portion corresponding to the third row and the first column may protrude in the first coupler shape.

Here, the first coupler shape and the second coupler shape may be a shape coupled to each other in a male-female manner. For example, the first coupler shape may be female portions 713a and 723a and the second coupler shape may be male portions 713b and 723b. Conversely, the first coupler shape may be male portions 713b and 723b and the second coupler shape may be female portions 713a and 723a.

**In** this case, each of the plurality of first space couplers 713 and the plurality of second space couplers 723 may protrude in a different shape from the facing coupling portions. That is, when a coupling portion protruding at a certain position of the first supporter 710 is in the first coupler shape, a coupling portion protruding at a position corresponding to the certain position of the second supporter 720 may be the second coupler shape. Accordingly, the facing first space coupler 713 and second space coupler 723 may be male-female coupled.

The plurality of first space couplers 713 may protrude in the first coupler shape at a position in the arrangement where the sum of the matrix values is an even number, and may protrude in the second coupler shape at a position in the arrangement where the sum of the matrix values is an odd number. For example, the first space coupler may protrude in the first coupler shape at the positions where the sum of the matrix values is an even number, such as (1, 1), (1, 3), (2, 2), (2, 4), (3, 1), (3, 3), and (5, 1), and may protrude in the second coupler shape at the positions where the sum of the matrix values is an odd number, such as (1, 2), (1, 4), (2, 1), (2, 3), (3, 2), (3, 4), and (5, 2).

The plurality of second space couplers 723 may protrude in second coupler shape at the positions where the sum of the matrix values in the arrangement corresponds to an even number, and may protrude in the first coupler shape at the positions where the sum of the matrix values in the arrangement corresponds to an odd number. For example, the second space coupler may protrude in the second coupler shape at the positions where the sum of the matrix values corresponds to an even number, such as (1, 1), (1, 3), (2, 2), (2, 4), (3, 1), (3, 3), and (5, 1), and may protrude in the first coupler shape at the positions where the sum of the matrix values corresponds to an odd number, such as (1, 2), (1, 4), (2, 1), (2, 3), (3, 2), (3, 4), and (5, 2).

**In** this way, the heat insulator 700 is formed in a form in which the plurality of first space couplers 713 and the plurality of second space couplers 723 alternate in the first coupler shape and the second coupler shape as illustrated in FIG. 9. Therefore, the first supporter 710 and the second supporter 720 are coupled by the coupling of the plurality of first space couplers 713 and the plurality of second space couplers 723, thereby forming the supporter as illustrated in FIG. 8. The supporter may be inserted into the space formed by the first plate 701 to the side plate 703 in a sliding manner, or may be sealed in a state where the supporter is positioned in the space.

**In** the heat insulator 700, in the case where the bent surfaces 712 and 722 and the side plate 703 are connected, as illustrated in FIG. 10, the gap SS including a predetermined area may be formed between the bent surfaces 712 and 722 and the side plate 703. Due to the gap SS, the thermal conduction between the side plate 703 and the bent surfaces 712 and 722 can be reduced.

Although the embodiments of the heat insulator have been described so far, the described embodiments can be modified in various ways without departing from the scope of the disclosure, and the scope of the disclosure should not be limited to the described embodiments, but should be determined not only by the claims described below but also by equivalents of the claims.

## Claims

1. A heat insulator, comprising:
a first supporter formed in a lattice shape and including one surface in contact with one surface of a first plate to support the first plate; and
a second supporter formed in a lattice shape that is at least partially identical to the first supporter, and including one surface in contact with one surface of the second plate, which is arranged apart from the first plate, to support the second plate,
wherein one or more of the first supporter and the second supporter includes a bent surface formed on one side thereof, and the bent surface contacts one surface of a side plate joining the first plate to the second plate, to support the side plate..

2. A heat insulator comprising:
a first plate;
a second plate arranged to be spaced apart from the first plate;
a side plate joining the first plate and the second plate on one side of the first plate and one side of the second plate; and
a supporter.

3. The heat insulator of claim 15, wherein the first supporter and the second supporter are formed in the same lattice shape.

4. The heat insulator of claim 15, wherein the first supporter and the second supporter are formed in a symmetrical shape in a state in which facing each other.

5. The heat insulator of claim 15, wherein the first supporter includes
a first central portion in contact with the first plate,
a first side surface in contact with one surface of the side plate on one side of the first central portion, and
a plurality of first space couplers protruding from the first central portion and coupled to the third supporter, and
the second supporter includes
a second central portion in contact with the second plate,
a second side surface in contact with one surface of the side plate on one side of the second central portion, and
a plurality of second space couplers protruding from the second central portion and coupled to the third supporter.

6. The heat insulator of claim 5, wherein the third supporter includes
a plurality of first support couplers protruding from one surface facing the first supporter and being male-female coupled to the plurality of first space couplers, and
a plurality of second support couplers protruding from the other surface facing the second supporter and being male-female coupled to the plurality of second space couplers.

7. The heat insulator of claim 15, wherein the third supporter further includes at least one of
a first shielding portion arranged between the first supporter and the third supporter and dividing a space between the first supporter and the third supporter into two or more regions, and
a second shielding portion arranged between the second supporter and the third supporter and dividing a space between the second supporter and the third supporter into two or more regions.

8. The heat insulator of claim 15, wherein a gap including a predetermined area is defined between the bent surface and the side plate in a state in which the bent surface and the side plate are in contact with each other.

9. A heat insulator comprising:
a first plate;
a second plate arranged to be spaced apart from the first plate;
a side plate joining the first plate and the second plate on one side of the first plate and one side of the second plate;
a first supporter formed in a lattice shape and including one surface in contact with one surface of the first plate and the other surface coupled with the other surface of the second supporter to support the first plate; and
a second supporter formed in a lattice shape that is at least partially identical to the first supporter and including one surface in contact with one surface of the second plate and the other surface coupled with the other surface of the first supporter to support the second plate.
wherein one or more of the first supporter and the second supporter includes a bent surface formed on at least one side thereof, and the bent surface contacts one surface of a side plate, which joins the first plate to the second plate, to support the side plate.

10. The heat insulator of claim 9, wherein the first supporter and the second supporter are formed in an asymmetrical shape in a state in which facing each other.

11. The heat insulator of claim 9, wherein the first supporter includes
a first central portion in contact with the first plate,
a first side surface in contact with one surface of the side plate on one side of the first central portion, and
a plurality of first space couplers protruding from the first central portion and coupled to the second supporter, and
the second supporter includes
a second central portion in contact with the second plate,
a second side surface in contact with one surface of the side plate on one side of the second central portion, and
a plurality of second space couplers protruding from the second central portion and coupled to the first supporter.

12. The heat insulator of claim 11, wherein each of the plurality of first space couplers and the plurality of second space couplers is arranged in a plurality of rows and columns according to the lattice shape and protrudes.

13. The heat insulator of claim 12, wherein each of the plurality of first space couplers and the plurality of second space couplers protrudes alternately in a first coupler shape and a second coupler shape different from the first coupler shape, in an arrangement according to the lattice shape.

14. The heat insulator of claim 13, wherein the plurality of first space couplers protrude in the first coupler shape at a position in the arrangement where a sum of matrix values corresponds to an even number, and protrude in the second coupler shape at a position in the arrangement where the sum of the matrix values corresponds to an odd number, and
the plurality of second space couplers protrude in the second coupler shape at a position in the arrangement where the sum of the matrix values corresponds to an even number, and protrude in the first coupler shape at a position in the arrangement where the sum of the matrix values corresponds to an odd number.

15. The heat insulator of claim 2, wherein the supporter includes
a first supporter formed in a lattice shape and including one surface in contact with one surface of the first plate to support the first plate,
a second supporter formed in a lattice shape that is at least partially identical to the first supporter and including one surface in contact with one surface of the second plate to support the second plate, and
a third supporter coupled to each of the first supporter and the second supporter between the first supporter and the second supporter to support each of the first supporter and the second supporter, and
one or more of the first supporter and the second supporter includes a bent surface formed on at least one side thereof, and the bent surface contacts one surface of a side plate joining the first plate to the second plate to support the side plate.
